# EUROPÄISCHE PATENTSCHRIFT

(11) **EP 3 527 062 B1**
(45) Veröffentlichungstag und Bekanntmachung des Hinweises auf die Patenterteilung: **23.09.2020**
(21) Anmeldenummer: 19154670.4
(22) Anmeldetag: 31.01.2019
(51) Int. Cl.: A01D 90/10, A01F 25/18, A01D 43/063

(54) **LANDWIRTSCHAFTLICHE ERNTEMASCHINE MIT DOSIERWALZEN**
AGRICULTURAL HARVESTER WITH METERING ROLLER
MACHINE DE RECOLTE AGRICOLE POURVUE DE ROULEAUX DE DOSAGE

(30) Priorität: 16.02.2018 DE 102018103541
(43) Veröffentlichungstag der Anmeldung: 21.08.2019
(73) Patentinhaber: PÖTTINGER Landtechnik GmbH, 4710 Grieskirchen (AT)
(72) Erfinder: Würzl, Andreas, 4710 Grieskirchen (AT); Weißenböck, Thomas, 4710 Grieskirchen (AT); Hofinger, Markus, 4710 Grieskirchen (AT)
(74) Vertreter: Thoma, Michael

(56) Entgegenhaltungen:
- AT-B- 335 849
- DE-A1- 3 100 883
- DE-A1- 4 208 574
- GB-A- 2 048 211

## Beschreibung

Die vorliegende Erfindung betrifft eine landwirtschaftliche Erntemaschine, insbesondere in Form eines Ladewagens, mit einem Laderaum, der durch eine Entladetür zu öffnen und zu schließen ist, und einer Abladedosiervorrichtung zum Abladen und Dosieren des Ernteguts aus dem Laderaum, wobei die genannte Abladedosiervorrichtung zumindest eine Dosierwalze aufweist, die zum Reduzieren des Anlaufwiderstands positionsverstellbar gelagert ist.

Bei landwirtschaftlichen Erntemaschinen wie beispielsweise Ladewagen oder Häckselwagen ist es wünschenswert, das im Laderaum bzw. Erntegutspeicher zwischengespeicherte Erntegut wie beispielsweise Heu oder Gras oder anderes Halm- oder Blattgut in Form eines gleichmäßigen Erntegutteppichs abladen zu können, beispielsweise um das Erntegut im Vorbeifahren in der Futterrinne einer Stallungsanlage, in einem Silo für die Silierung des zu verdichtenden Ernteguts oder zu einer anderweitigen Verarbeitung entlang eines Abladepfads ausbreiten zu können.

Um ein solches gleichmäßiges Abladen und Dosieren des Ernteguts aus/von dem Erntegutspeicher der landwirtschaftlichen Maschine zu erreichen, ist es bekannt, im Entladebereich, d.h. der Öffnung des Laderaums bei geöffneter Entladetür, Dosierwalzen anzuordnen, die aufrecht stehen oder liegend angeordnet sein können und durch einen Dosierantrieb beim Abladen mit einer gewünschten Drehzahl angetrieben werden, um die gewünschte Ablademenge möglichst exakt zu dosieren, vgl. beispielsweise AT 335 849 B und DE 31 00 883 A1. Die Dosierwalzen, die voneinander beabstandet angeordnet und parallel ausgerichtet sein können, weisen in der Regel umfangsseitig Mitnehmer beispielsweise in Form von Zinken oder Stacheln oder einer anderen Vorsprungsprofilierung auf, womit sich die Dosierwalzen sozusagen in das Erntegut beißen bzw. mit dem Erntegut in Eingriff gelangen und die Förderwirkung auf das Erntegut ausüben. Grundsätzlich kann aber auch nur eine einzelne Dosierwalze vorgesehen sein.

Die GB 20 48 211 A zeigt eine Erntemaschine, bei der Strohballen mittels gegenläufig rotierender Walzen zerkleinert und von einem Wagen abgeladen werden können. Dosierwalzen für andere Zwecke, nämlich organische Abfallmaterialien zeigt die Schrift DE 42 08 574 A1.

Durch den Erntegutdruck, mit dem das Erntegut zumindest zu Anfang des Entladevorgangs gegen die Dosierwalzen drückt, kann der Anlaufwiderstand der Dosierwalzen recht groß werden und eine Antriebsleistung erfordern, die wesentlich größer ist als die dann im angelaufenen Dosierbetrieb benötigte Antriebsleistung. Um eine hierfür an sich erforderliche Überdimensionierung des Antriebs zu vermeiden bzw. ein Steckenbleiben oder Nicht-Anlaufen der Dosierwalzen zu vermeiden, sind bereits diverse Maßnahmen vorgeschlagen worden, um den Anlaufwiderstand zu überwinden bzw. abzusenken.

Beispielsweise wurde angedacht, den Kratzboden vor Starten der Dosierwalzen in verkehrter Richtung anzutreiben, um den Erntegutdruck von den Dosierwalzen zu nehmen. Ferner wurde vorgeschlagen, im Antriebsstrang für die Dosierwalzen eine Kupplung vorzusehen, um durch mehrfaches Ein- und Auskuppeln ein "Freiruckeln" der Dosierwalzen durch ruckweise Beaufschlagung mit Drehmoment zu erzielen. Um solche Kupplungen im Antriebsstrang zu vermeiden, schlägt die Schrift DE 1204537 A zum Erleichtern des Anlaufens der Dosierwalzen vor, die Dosierwalzen für den Anlaufvorgang ein Stück weit vom Erntegutstock, der sich im Laderaum gebildet hat, wegzubewegen. Die Dosierwalzen sind hierzu an einem Rahmen gelagert, der am oberen Ende des Laderaums um eine liegende Achse schwenkbar gelagert ist, so dass insbesondere die unterste Dosierwalze, die sich knapp über dem Laderaumboden befindet, ein Stück weit weggeschwenkt werden kann, so dass sich der Erntegutdruck gegen die Dosierwalze und damit der Anlaufwiderstand vermindert. Dabei ist im Bereich der untersten Dosierwalze eine Entladeklappe vorgesehen, die nach unten weggeschwenkt werden kann, um eine Entladeöffnung freizugeben.

In ähnlicher Weise schlägt die Schrift EP 30 78 256 A1 vor, die Dosierwalzen an einem aufschwenkbaren Rahmen anzuordnen, der am oberen Ende des Laderaums um eine liegende Querachse schwenkbar angelenkt ist und gleichzeitig die Entladetür trägt, welche ebenfalls um eine liegende Querachse am oberen Ende des Laderaums gegenüber dem besagten Tragrahmen für die Dosierwalzen aufgeschwenkt werden kann, um die Entladeöffnung im Wesentlichen über die gesamte Höhe des Laderaums freizugeben. Dabei wird der die Dosierwalzen tragende Schwenkrahmen durch Schließen der Entladetür in einer Ruheposition fixiert, aus der der genannte Tragrahmen der Dosierwalzen um einen vorbestimmten Winkel aufschwenken kann, wenn die Entladetür geöffnet wird. Eine Federeinrichtung drückt dabei den Tragrahmen der Dosierwalzen in die verschwenkte Stellung, wenn die Entladeklappe geöffnet ist.

Die Schrift DE 20017510 U1 schlägt ferner vor, eine Überlastung der Dosierwalzen zu vermeiden, indem eine Erfassung der Belastung der Dosierwalzen erfolgt und der Kratzboden nur so viel Erntegut auf die Dosierwalzen zufördert, dass deren Belastung begrenzt bleibt. Die Belastung der Dosierwalzen wird dabei durch einen Torsionsmesser erfasst, der die Torsion einer Antriebswelle zum Antreiben einer Dosierwalze misst. Mittels einer solchen Torsionsmessung im Antriebsstrang kann die Belastung der Dosierwalzen allerdings erst bestimmt werden, wenn die Dosierwalzen angetrieben werden. Zudem verursacht ein solcher Torsionsmesser zusätzliche Bauteil- und Montagekosten.

Der vorliegenden Erfindung liegt die Aufgabe zugrunde, eine verbesserte landwirtschaftliche Erntemaschine der eingangs genannten Art zu schaffen, die Nachteile des Standes der Technik vermeidet und Letzteren in vorteilhafter Weise weiterbildet. Insbesondere soll ein leichtes Anlaufen der Dosiervorrichtung erreicht werden, eine einfache Bestimmung des Erntegutdrucks gegen die Dosiervorrichtung und damit einhergehend der Belastung der zumindest einen Dosierwalze ermöglicht werden und eine Erhöhung der Bauteil- und Montagekosten möglichst vermieden werden.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, der zumindest einen Dosierwalze verschiedene Verstellbarkeiten zu geben, um verschiedenen Betriebszuständen der landwirtschaftlichen Erntemaschine mit unterschiedlichen Verstellbarkeiten der Dosierwalze gerecht werden zu können. Insbesondere wird für den Ladebetrieb, in dem Erntegut gegen die Dosierwalzen gefördert wird, eine andere Verstellbarkeit der Dosierwalze vorgesehen als im Entladebetrieb, in dem die Dosierwalze durch Rotation Erntegut ausdosieren soll. Erfindungsgemäß ist die Dosierwalze mehrstufig verstellbar gelagert, wobei die Dosierwalze bei geschlossener Entladetür einen ersten Verstellweg zum Ausweichen unter Erntegutdruck entgegen einer Vorspannvorrichtung und bei geöffneter Entladetür einen zweiten Verstellweg zum weiteren Ausweichen vom Erntegutdruck und Reduzieren des Anlaufwiderstands besitzt. Dabei kann der erste, bei geschlossener Entladetür zur Verfügung stehende Verstellweg kleiner bzw. kürzer sein als der zweite Verstellweg, der bei geöffneter Entladetür zur Verfügung steht, so dass die zumindest eine Dosierwalze bei geöffneter Entladetür weiter ausweichen kann als bei geschlossener Entladetür. Alternativ oder zusätzlich zu einer solchermaßen unterschiedlichen Länge der beiden Verstellwege können den beiden Verstellwegen bzw. Verstellbarkeiten aber auch unterschiedlich starke Vorspannkräfte zugeordnet sein, mit denen die Dosierwalze entgegen dem Erntegutdruck zurückgehalten wird, wobei insbesondere für den zweiten Verstellweg bei geöffneter Entladetür eine kleinere Vorspannung vorgesehen sein kann als für den ersten Verstellweg bei geschlossener Entladetür. Dementsprechend kann sich die Dosierwalze bei geöffneter Entladetür leichter wegbewegen, da nur eine kleinere Vorspannkraft zu überwinden ist.

Durch die mehrstufige Verstellbarkeit ist die Dosierwalze - zusätzlich zu ihrer Drehbarkeit - nicht erst bei geöffneter Entladetür, sondern auch schon bei geschlossener Entladetür und damit im Ladebetrieb quer zur Dosierwalzenlängsachse verstellbar bzw. beweglich.

Damit kann die Verstellbarkeit der Dosierwalze vorteilhafterweise für mehrere Funktionen gleichzeitig genutzt werden. Bei geöffneter Entladetür kann durch den größeren Verstellweg und/oder die reduzierte Rückhalte- bzw. Vorspannkraft der Anlaufwiderstand der Dosierwalze beträchtlich reduziert werden, da die Dosierwalze dem Erntegutdruck weiter und/oder leichter ausweichen und damit leichter anlaufen kann. Gleichzeitig kann bei geschlossener Entladetür der Verstellweg und eine sich entgegen der Vorspannung einstellende Verstellbewegung der Dosierwalze unter dem Erntegutdruck als Indikator dafür genutzt werden, wie stark das Erntegut bereits gegen die Dosierwalze drückt oder ob das Erntegut bereits überhaupt gegen die Dosierwalze drückt und wie stark der Laderaum mit Erntegut beladen ist.

In Weiterbildung der Erfindung kann eine Erfassungseinrichtung zum Erfassen der Belastung der Dosierwalze durch das Erntegut vorgesehen sein, die den ersten Verstellweg und eine Bewegung der Dosierwalze entlang dieses ersten Verstellwegs überwacht bzw. die Belastung der Vorspannvorrichtung erfasst. Mit zunehmendem Erntegutdruck gegen die Dosierwalze kann sich die Dosierwalze auch bei geschlossener Entladetür entgegen der Vorspannung entlang des ersten Verstellwegs zunehmend weiter verstellen, so dass die Belastung der Vorspannvorrichtung und/oder der sich einstellende Verstellweg als Maß für die Belastung der Dosierwalze und/oder als Maß für den Füllstand des Laderaums verwendet werden kann.

Die Erfassungseinrichtung kann hinsichtlich ihrer Sensorik grundsätzlich verschieden ausgebildet sein. Beispielsweise kann ein Wegmesssensor vorgesehen sein, der den Verstellweg der Dosierwalze entlang des ersten Verstellwegs misst. Alternativ oder zusätzlich kann ein Kraftsensor die sich ergebende Belastung der Vorspannvorrichtung messen. Ist eine gröbere Bestimmung der Verstellung bzw. Belastung der Dosierwalze ausreichend, kann auch ein Kontaktsensor vorgesehen sein, der das Erreichen einer Endstellung der Dosierwalze entlang des ersten Verstellwegs erfasst, wobei anstelle eines Kontaktsensors auch ein anderer Lagesensor wie beispielsweise eine Lichtschranke vorgesehen sein kann, die das Erreichen eines bestimmten Stellwegs anzeigt.

In Abhängigkeit eines Signals der genannten Erfassungseinrichtung kann in Weiterbildung der Erfindung eine Steuervorrichtung verschiedene Funktionen der Erntemaschine steuern. Insbesondere kann die Steuervorrichtung in Abhängigkeit eines Signals der Erfassungseinrichtung, das die Belastung der Dosierwalze durch das Erntegut angibt, einen Förderbodenantrieb, insbesondere in Form eines Kratzbodenantriebs, ansteuern. Beispielsweise kann im Ladebetrieb bei geschlossener Entladetür ein Kratzboden stillgesetzt werden, wenn die Dosierwalze den ersten Verstellweg ausgeschöpft hat oder eine vorbestimmte Belastung erreicht hat, um nicht noch weiter Erntegut gegen die Dosierwalze zu fördern. Alternativ oder zusätzlich kann die Steuervorrichtung den Kratzbodenantrieb aber auch im Entladebetrieb in Abhängigkeit des Signals der Erfassungseinrichtung steuern, um einen gleichmäßigen, gewünschten Erntegutdruck gegen die Dosierwalzen einstellen zu können.

Alternativ oder zusätzlich können aber auch andere Maschinenfunktionen in Abhängigkeit des Signals der Erfassungseinrichtung gesteuert werden. Beispielsweise kann eine Füllstandsanzeige, die den Füllstand des Laderaums anzeigt, von der Steuervorrichtung in Abhängigkeit des genannten Signals angesteuert werden. Alternativ oder zusätzlich kann die Steuervorrichtung auch einen Dosierwalzenantrieb in Abhängigkeit der erfassten Belastung der Dosierwalzen ansteuern, beispielsweise dessen Drehmoment und/oder Drehzahl erhöhen oder erniedrigen.

Die mehrstufige Verstellbarkeit der zumindest einen Dosierwalze kann grundsätzlich in verschiedener Art und Weise ausgebildet sein, beispielsweise in Form einer pendelnden und/oder schwenkbaren Aufhängung der Dosierwalze. Insbesondere kann die zumindest eine Dosierwalze in vorteilhafter Weiterbildung der Erfindung mit ihren Enden in einer Linearführung quer zur Walzenlängsachse verschieblich geführt sein. Eine solche Linear- bzw. Schiebeführung kann vorteilhafterweise sehr kleinbauend ausgeführt sein und es kann auf schwenkbare Tragrahmen, die sich im Wesentlichen über die gesamte Laderaumhöhe erstrecken, verzichtet werden.

Eine solche Schiebeführung kann dabei einen zumindest abschnittsweise geraden Verstellweg vorsehen. Grundsätzlich wäre es aber auch möglich, dass die Schiebeführung einen gebogenen Verstellweg für die Dosierwalze vorsieht, entlang dessen die Dosierwalze verschoben werden kann, wobei der Verschiebeweg auch abschnittsweise gerade und abschnittsweise kurvig sein kann.

Insbesondere kann die genannte Linear- bzw. Schiebeführung eine Bewegungsrichtung als Verstellweg für die Dosierwalze vorsehen, die sich näherungsweise senkrecht zu dem Abschnitt der Entladetür erstreckt, der in der geschlossenen Stellung der Entladetür im Bereich der Dosierwalze liegt bzw. unmittelbar der Dosierwalze gegenüberliegt. Insbesondere kann die genannte Bewegungsrichtung näherungsweise parallel zur Förderrichtung der Dosierwalze sein, entlang derer die Dosierwalze das Erntegut abdosiert bzw. abfördert. Ist eine im geschlossenen Zustand näherungsweise aufrechte Entladetür vorgesehen, kann die Dosierwalze näherungsweise horizontal senkrecht zur Entladetürebene verstellbar sein.

Die genannte Schiebeführung kann beispielsweise über eine Langlochführung realisiert sein, bei der gegenüberliegende Enden der Dosierwalze in Langlöchern geführt sind. Alternativ oder zusätzlich kann auch eine Schlittenführung vorgesehen sein, bei der die Dosierwalze drehbar an einem oder mehreren Schlitten gelagert ist, der/die entlang einer Schlittenführung verfahrbar gelagert ist/sind.

In vorteilhafter Weiterbildung der Erfindung kann die genannte Linear- und/oder Schiebeführung sowohl den genannten ersten Verstellweg als auch den genannten zweiten Verstellweg vorsehen, so dass beide Verstellbarkeiten und Verstellwege in eine Lagereinrichtung, d.h. die genannte Linearführung integriert sind.

In vorteilhafter Weiterbildung der Erfindung kann das Freischalten des zweiten Verstellwegs, der über den ersten Verstellweg hinausgeht und/oder eine geringere Rückhalte- bzw. Vorspannkraft besitzt, und/oder die Länge des ersten und/oder zweiten Verstellwegs und/oder die Höhe der Vorspannkräfte der Vorspannvorrichtung durch eine Einstellvorrichtung eingestellt werden, wobei die genannte Einstellvorrichtung vorteilhafterweise einen fremdenergiebetätigbaren Stellaktor aufweisen kann, mittels dessen der zweite Verstellweg wahlweise freigegeben oder blockiert werden kann und/oder die Länge des ersten Verstellwegs variiert werden kann und/oder die Vorspannvorrichtung verstellt werden kann. Beispielsweise kann mittels eines solchen Stellaktors die Beweglichkeit der Lagerung der Dosierwalze, insbesondere die Längsverschiebbarkeit der vorgenannten Linearführung, blockiert und/oder auf den ersten Verstellweg beschränkt und/oder gänzlich freigegeben werden und/oder die Vorspannvorrichtung verstellt werden kann.

Ein solcher Stellaktor kann grundsätzlich verschieden ausgebildet sein. Beispielsweise kann ein Hydraulikzylinder vorgesehen sein. Alternativ oder zusätzlich kann ein Verstellhebel- und/oder Riegelmechanismus vorgesehen sein, der von einem geeigneten Stellantrieb in verschiedene Stellungen bringbar ist, um den Verstellweg in der genannten Weise einstellen zu können.

Vorteilhafterweise kann der genannte Stellaktor in Abhängigkeit einer Verstellbewegung und/oder Position der Entladetür angesteuert werden und/oder an die Entladetür angekoppelt sein, um die Verstellbarkeit der Dosierwalze in Abhängigkeit der Stellung und/oder Betätigung der Entladetür zu betätigen bzw. umzuschalten und/oder mit der Bewegung der Entladetür zu synchronisieren.

Insbesondere kann eine Schaltvorrichtung zum Umschalten der Verstellbarkeit vom ersten auf den zweiten Verstellweg und/oder umgekehrt vom zweiten Verstellweg auf den ersten Verstellweg in Abhängigkeit einer Stellung der Entladetür vorgesehen sein. Eine solche Schaltvorrichtung kann beispielsweise einen Betätiger umfassen, der als Stellaktor im vorgenannten Sinne arbeitet und beim Schließen der Entladetür mit der genannten Entladetür in Eingriff gerät und/oder durch die Entladetür verstellt wird, um den Verstellweg für die Dosierwalze auf den genannten ersten Verstellweg zu begrenzen und/oder die Vorspannvorrichtung zu verstellen.

Die genannten Schaltvorrichtung kann insbesondere einen Verstellwegbegrenzer umfassen, der wahlweise den zweiten Verstellweg freigibt oder sperrt, wobei ein solcher Verstellwegbegrenzer als Anschlag ausgebildet sein kann, gegen den die Dosierwalze entlang ihres Verstellwegs und/oder die damit zusammenwirkende Vorspannvorrichtung fährt, wenn die Dosierwalze versucht, dem Erntegutdruck entlang des Verstellwegs auszuweichen.

Der genannte Verstellwegbegrenzer kann durch den vorgenannten, fremdenergiebetätigten Stellaktor beispielsweise in Form des Hydraulikzylinders betätigt werden. Insbesondere kann der genannte Verstellwegbegrenzer aber auch dazu vorgesehen und ausgebildet sein, von der Entladetür oder einem damit verbundenen Betätigerteil verstellt bzw. betätigt zu werden, insbesondere wenn die Entladetür in ihre geschlossene Stellung fährt. Insbesondere kann die Entladetür oder ein damit verbundenes Betätigerteil den Verstellwegbegrenzer in seine sperrende Stellung verfahren bzw. mitnehmen, wenn die Entladetür schließt.

In vorteilhafter Weiterbildung der Erfindung kann der genannte Verstellwegbegrenzer in der zuvor genannten Schiebeführung verschieblich geführt sein und einen Anschlag bilden, der beim Schließen der Entladetür mit der Entladetür in Eingriff gerät und von der Entladetür in eine Sperrstellung schiebbar ist, in der der Verstellbegrenzer die Verstellbarkeit der Dosierwalze auf den ersten, kleineren Verstellweg begrenzt.

Alternativ oder zusätzlich zu einer verschieblichen Lagerung des genannten Verstellwegbegrenzers in der Schiebeführung selbst, in der auch die Dosierwalze verschieblich geführt ist, kann der genannte Verstellwegbegrenzer auch durch eine separate Lagerung relativ zum Verstellweg der Schiebeführung beweglich gelagert sein, insbesondere parallel verschiebbar sein.

In vorteilhafter Weiterbildung der Erfindung kann die genannte Vorspannvorrichtung, gegen deren Vorspannung die Dosierwalze auch bei geschlossener Entladetür verschoben werden kann, selbst ebenfalls in der genannten Schiebeführung verschieblich gelagert sein, in der auch die Dosierwalze verschieblich gelagert ist, so dass die Vorspannvorrichtung bei entsperrtem zweiten Verstellweg zusammen mit der Dosierwalze in der Schiebe- bzw. Linearführung verschoben werden kann.

Alternativ oder zusätzlich kann die genannte Vorspannvorrichtung aber auch durch eine separate Lagerung, insbesondere Schiebeführung, zumindest näherungsweise parallel zum Verstellweg der Dosierwalze verschieblich gelagert sein, um bei entsperrtem zweiten Verstellweg zusammen mit der Dosierwalze verschoben werden zu können.

Die Erfindung wird nachfolgend anhand eines bevorzugten Ausführungsbeispiels und zugehöriger Zeichnungen näher erläutert. In den Zeichnungen zeigen:

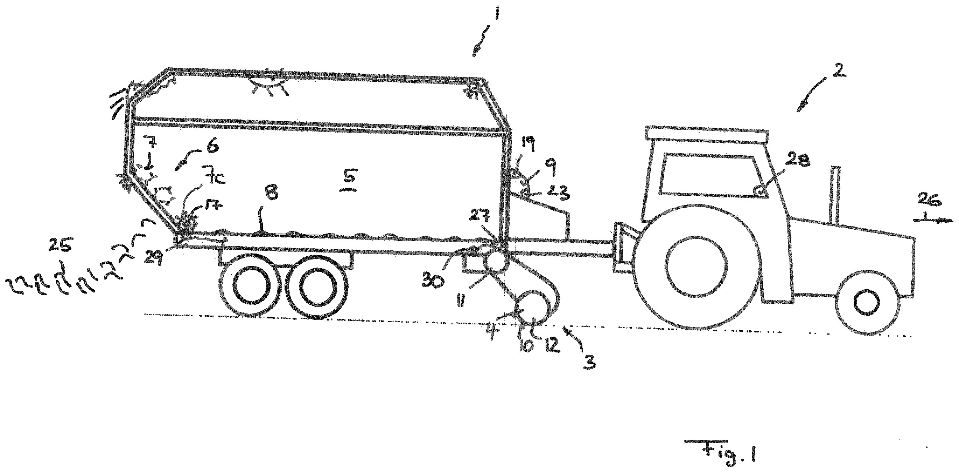

- Fig. 1:: eine schematische Seitenansicht einer landwirtschaftlichen Erntemaschine in Form eines Ladewagens,

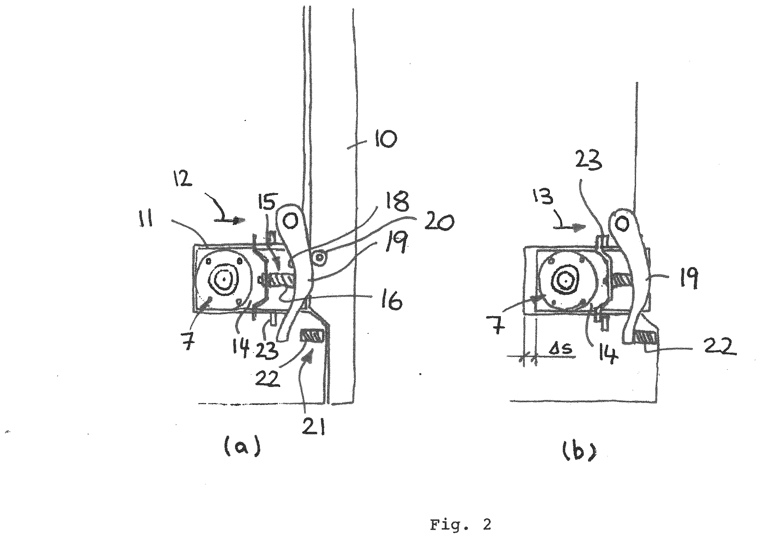

- Fig. 2:: eine ausschnittsweise Seitenansicht der Schiebeführung für eine der in Fig. 1 gezeigten Dosierwalzen, die eine mehrstufige Verstellbarkeit der Dosierwalze vorsieht, wobei in der Teilansicht (a) ein Verstellwegbegrenzer zum Begrenzen des Verstellwegs der Dosierwalze in einer sperrenden Stellung bei geschlossener Entladetür gezeigt ist, gemäß der die Dosierwalze nur entlang der kleineren ersten Verstellwegs verfahrbar ist, und in der Teilansicht (b) der Verstellwegbegrenzer in einer freigebenden Stellung bei geöffneter Entladetür gezeigt ist, bei der die Dosierwalze entlang des zweiten größeren Verstellwegs verstellbar ist.

Die in Fig. 1 gezeigte Erntemaschine in Form eines Ladewagens 1 wird in an sich bekannter Weise von einem Schlepper 2 gezogen und besitzt eine Erntegutaufnahmevorrichtung 3, die einen Aufsammelförderer 10 zum Aufsammeln des Ernteguts vom Boden beispielsweise in Form einer Pick-up 4 mit einer umlaufend antreibbaren Stachelwalze 12, sowie einen dem genannten Aufsammelförderer 10 nachgeschalteten Beschickungsförderer 11 aufweisen kann, welcher das von Aufsammelförderer 10 aufgesammelte Erntegut durch einen Förderkanal in den Laderaum bzw. Erntegutspeicher 5 des Ladewagens fördert.

Im Inneren des Laderaums 5 kann das Erntegut mittels eines Speicherbodenförderers beispielsweise in Form eines Kratzbodens 8 weitergefördert bzw. verteilt werden, wobei besagter Kratzboden 8 insbesondere auch dem Entladen des Laderaums bzw. dem Abladen des Ernteguts dient. Besagter Kratzboden 8 fördert das Erntegut im Laderaum auf eine Anordnung von mehreren Dosierwalzen 7 zu, die am Heck des Ladewagens bzw. der der Aufnahmevorrichtung 3 gegenüber liegenden Seite des Laderaums 5 vorgesehen sein kann. Die genannten Dosierwalzen 7 bilden zusammen mit dem Kratzboden 8 eine Abladedosiervorrichtung 6, mittels derer das im Laderaum 5 aufgenommene Erntegut in Form eines Erntegutteppichs 25 abgeladen werden kann, während der Schlepper 2 den Ladewagen 1 mit einer Fahrgeschwindigkeit 26 vorwärts bewegt.

Wie Fig. 1 zeigt, können die genannten Dosierwalzen 7 beispielsweise liegend übereinander entlang der Heckwandung des Laderaums 8 angeordnet sein, wobei jedoch auch andere Anordnungen, beispielsweise in stehender Ausrichtung vorgesehen sein könnten.

Die genannten Dosierwalzen 7 sind von einem Dosierwalzenantrieb 17 rotatorisch mit variabel einstellbarer Drehgeschwindigkeit antreibbar, wobei besagter Dosierwalzenantrieb 17 vom Schlepper 2 her mit Antriebsenergie versorgbar sein kann, vorteilhafterweise jedoch unabhängig von der Drehzahl des Schleppermotors oder der Fahrgeschwindigkeit des Schleppers gesteuert, d.h. in seiner Drehzahl variiert werden kann. Insbesondere kann der genannte Dosierwalzenantrieb 17 einen elektrischen oder hydraulischen Antriebsmotor umfassen, der in Fig. 1 nur schematisch angedeutet ist. Die Dosierwalzen 7 können hierbei jeweils einzeln angetrieben, gegebenenfalls aber auch von einem gemeinsamen Antriebsmotor unter Zwischenschaltung eines Kopplungsgetriebes angetrieben werden.

Der vorgenannte Kratzboden 8 ist von einem Kratzbodenantrieb 27 antreibbar, der vorteilhafterweise ebenfalls vom Schlepper 2 her mit Energie versorgbar ist, jedoch hinsichtlich seiner Fördergeschwindigkeit unabhängig von Schleppermotordrehzahl und Schlepperfahrgeschwindigkeit einstellbar ist. Vorteilhafterweise kann auch hier ein hydraulischer oder ein elektrischer Antriebsmotor Verwendung finden.

Der genannte Dosierwalzenantrieb 17 und der genannte Kratzbodenantrieb 27 können von einer Steuervorrichtung 9 her gesteuert werden, welche beispielsweise in Form eines Jobrechners am Ladewagen 1 ausgebildet sein kann, gegebenenfalls jedoch auch von einem Steuerungsterminal gebildet sein kann, welches am Schlepper installierbar ist.

Die genannte Steuervorrichtung 9 ist hierbei mit diversen Erfassungseinrichtungen bzw. Sensoren verbunden, mittels derer diverse Betriebs- bzw. Bearbeitungsparameter erfasst werden. Diese Sensoren, die Teil einer Überwachungsvorrichtung für den Abladebetrieb sind, können insbesondere einen Fahrgeschwindigkeitssensor 28 zur Erfassung der Fahrgeschwindigkeit 26, einen Drehmoment- bzw. Belastungssensor 29 zur Erfassung des Drehmoments bzw. der Belastung der Dosierwalzen 7 und einen Drehmoment- bzw. Belastungssensor 30 zur Erfassung der Belastung bzw. des Drehmoments des Kratzbodenantriebs umfassen. Die genannten Drehmoment- bzw. Belastungssensoren 29 und 30 können hierbei unterschiedlich ausgebildet sein, beispielsweise in Form von Strommesssensoren, welche den Betriebsstrom der elektrischen Antriebsmotoren messen, oder in Form von hydraulischen Drucksensoren, die den an den Hydraulikmotoren Druck messen, und/oder Durchflusssensoren, die die durch die Hydraulikmotoren durchströmende Druckmenge messen.

Von den genannten Dosierwalzen 7 ist zumindest eine Dosierwalze 7c quer zu ihrer Rotationsachse verstellbar gelagert, wobei ggf. auch mehrere oder alle der genannten Dosierwalzen in entsprechender Weise verschiebbar gelagert sein können. Insbesondere ist aber die unterste Dosierwalze 7c, die dem Boden des Laderaums 5 am nächsten ist, verschieblich gelagert, um dem Erntegutdruck ausweichen zu können.

Wie Fig. 2 zeigt, kann die zumindest eine Dosierwalze 7 entlang eines Verstellwegs 12, 13 verschoben werden, der sich zumindest abschnittsweise und/oder näherungsweise parallel zur Förderrichtung des Kratzbodens 8 erstreckt. Insbesondere kann die Dosierwalze 7 entlang einer liegenden Bewegungsrichtung auf die Entladetür 10 zu bewegt werden.

Insbesondere kann die genannte Dosierwalze 7 durch eine Schiebe- und/oder Linearführung 11 entlang eines Verstellwegs 12, 13 verstellt bzw. verschoben werden, der sich näherungsweise parallel zum Boden des Laderaums 5 auf die Entladetür 10 zu erstreckt.

Die genannte Dosierwalze 7 kann hierbei mit ihren gegenüberliegenden Enden, insbesondere dort vorgesehenen Achszapfen, verschieblich an jeweils einer Schiebeführungseinheit verschieblich geführt sein, um entlang des genannten Verstellwegs verschoben werden zu können, wobei die genannten Schiebeführungseinheiten seitlich im Bereich der Ränder des Laderaums 5, insbesondere an dessen seitlichen Laderaumwänden, angeordnet sein können. Beispielsweise können die Achszapfen der Dosierwalze bzw. daran angebrachte Drehlager jeweils an einem Schlitten befestigt sein, der entlang dem genannten Verstellweg 12, 13 verschiebbar geführt ist.

Wie Fig. 2 zeigt, wird die Dosierwalze 7 bzw. deren seitlicher Lagerschlitten 14 durch eine Vorspannvorrichtung 15 in eine Ausgangsstellung bzw. auf eine Ausgangsstellung hin vorgespannt. In der besagten Ausgangsstellung ist die Dosierwalze 7 am weitesten in den Laderaum 5 hinein verschoben.

Die genannte Vorspannvorrichtung 15 kann dabei eine Federeinrichtung 16 beispielsweise in Form einer mechanischen Druckfeder umfassen, um die Dosierwalze 7 elastisch in die genannte Ausgangsstellung vorzuspannen. Anstelle oder zusätzlich zu einer mechanischen Druckfeder kann aber auch eine andere Federeinrichtung beispielsweise in Form eines Druckmittelzylinders mit Druckspeicher oder eine Zugfeder oder eine andere Federeinrichtung vorgesehen sein.

Die genannte Vorspannvorrichtung 15 ist hinsichtlich ihres Verstellwegs und/oder ihrer Vorspannkraft mehrstufig einstellbar ausgebildet, so dass sich die Dosierwalze 7 entgegen verschieden hohen Vorspannkräften und/oder entlang verschiedener Verstellwege verstellen kann.

Insbesondere kann die Vorspannvorrichtung 15 sich an einem beweglichen Anschlag 18 abstützen, der beispielsweise in Form eines beweglich gelagerten Hebels 19 ausgebildet sein kann. Der genannte Anschlag 18 kann insbesondere parallel oder zumindest näherungsweise parallel zu dem Verstellweg 12, 13 der Dosierwalze 7 beweglich gelagert insbesondere verschiebbar sein, so dass die Dosierwalze 7 unterschiedlich stark vorgespannt ist, je nachdem, in welcher Stellung sich der Anschlag 18 befindet.

Der genannte Anschlag 18 ist dabei vorteilhafterweise derart konfiguriert, dass er von der Entladetür 10 in eine erste Stellung zwingbar ist, wenn die Entladetür 10 geschlossen wird. Beispielsweise kann an der Entladetür 10 eine Druckrolle 20 oder ein anderes Eingriffsteil vorgesehen sein, das beim Schließen der Entladetür 10 mit dem Anschlag 18 bzw. dem Hebel 19 in Eingriff gerät und diesen in seine erste sperrende Stellung zwingt, die Fig. 2(a) zeigt.

Wird die Entladetür 10 geöffnet, kann sich der Anschlag 18 wegbewegen und somit sich die Vorspannvorrichtung 15 entspannen, so dass die Dosierwalze 7 unter geringerer Vorspannung oder ggf. auch gänzlich ohne Vorspannung ein Stück weit in der Schiebeführung 11 verschoben werden und dem Erntegutdruck ausweichen kann.

Vorteilhafterweise kann der genannte Anschlag 18 dabei zweistufig bewegt werden. Ist die Entladetür 10 geöffnet, kann sich der Anschlag 18 und damit die Abstützung der Vorspannvorrichtung 15 zunächst frei bzw. näherungsweise frei wegbewegen, so dass die Dosierwalze 7 näherungsweise widerstandsfrei ausweichen kann. Dies geht so lange, bis der Hebel 19 eine zweite Vorspannvorrichtung 21 beispielsweise in Form einer Federeinrichtung 22 erreicht. In einer zweiten Phase kann der Hebel 19 nur noch unter Überwindung der Vorspannkraft der besagten zweiten Vorspannvorrichtung 21 weiter verschwenkt werden, so dass die Dosierwalze 7 nur unter Überwindung der zweiten Vorspannkraft der zweiten Vorspannvorrichtung 21 weiter weggedrückt werden kann. Alternativ oder zusätzlich kann die Vorspannung der ersten Vorspannvorrichtung 15 überwunden werden.

Wie Fig. 2 zeigt, sind die beiden Vorspannvorrichtungen 15 und 21 hintereinander geschaltet, so dass beim Verschieben der Dosierwalze 7 zunächst die Vorspannvorrichtung weiter gespannt wird, deren Vorspannkraft kleiner ist.

Somit stehen je nach Stellung der Entladetür 10 zweierlei Verstellbarkeiten zur Verfügung: Ist die Entladetür 10 geschlossen und der Anschlag 18 in seine verriegelnde erste Stellung gezwungen, steht für ein Verschieben der Dosierwalze 7 lediglich der Verstellweg der ersten Vorspannvorrichtung 15 zur Verfügung, durch den sich die Dosierwalze 7 gegenüber dem Anschlag 18 auch bei geschlossener Entladetür 10 verstellen kann.

Wird andererseits die Entladetür 10 geöffnet, steht zusätzlich ein zweiter Verstellweg zur Verfügung, der sich durch die Verschiebbarkeit des Anschlags 18 ergibt und ggf. durch die genannte zweite Vorspannvorrichtung 21 gesteuert werden kann. Die besagte zweite Vorspannvorrichtung 21 kann abschnittsweise oder auch über den gesamten zusätzlichen zweiten Verstellweg eine Vorspannkraft vorsehen, die überwunden werden muss, wenn der Anschlag 18 entsprechend weiter verschoben werden soll.

Der gesamte Verstellweg der Dosierwalze 7 kann durch einen Anschlag 23 insgesamt begrenzt werden, um eine zu weite Verstellung zu verhindern. Der genannte Anschlag 23 kann ggf. verstellbar sein, um unterschiedlich lange Verstellwege vorsehen zu können, wobei beispielsweise ein Stellaktor zum Verstellen des Anschlags 23 vorgesehen sein kann. Durch eine solche Verstellbarkeit des Anschlags 23 ist es ggf. auch möglich, die Dosierwalze 7 gänzlich zu fixieren, d.h. die Verstellbarkeit der Linearführung 11 gänzlich zu sperren.

## Patentansprüche

1. Landwirtschaftliche Erntemaschine, insbesondere in Form eines Ladewagens, mit einem Laderaum (5), der durch eine Entladetür (10) zu öffnen und zu verschließen ist, und einer Abladedosiervorrichtung (6) zum Abladen und Dosieren des Ernteguts aus dem Laderaum (5), wobei die Abladedosiervorrichtung (6) zumindest eine Dosierwalze (7) aufweist, die zum Reduzieren des Anlaufwiderstands positionsverstellbar gelagert ist, **dadurch gekennzeichnet, dass** die Dosierwalze (7) mehrstufig verstellbar gelagert ist, wobei die Dosierwalze (7) bei geschlossener Entladetür (10) einen ersten Verstellweg (12) zum Ausweichen unter Erntegutdruck entgegen einer ersten Vorspannkraft einer Vorspannvorrichtung (15) und bei geöffneter Entladetür einen zweiten Verstellweg (13) zum Ausweichen unter Erntegutdruck ohne Überwinden einer Vorspannkraft oder entgegen einer zweiten Vorspannkraft, die kleiner ist als die erste Vorspannkraft, besitzt.

2. Landwirtschaftliche Erntemaschine nach dem vorhergehenden Anspruch, wobei der zweite Verstellweg (13) länger ist als der erste Verstellweg (12) und/oder über den ersten Verstellweg (12) hinausgeht.

3. Landwirtschaftliche Erntemaschine nach einem der vorhergehenden Ansprüche, wobei die zumindest eine Dosierwalze (7) mit ihren Enden in einer Schiebeführung (11) quer zur Dosierwalzenlängsachse verschieblich geführt ist.

4. Landwirtschaftliche Erntemaschine nach dem vorhergehenden Anspruch, wobei die Dosierwalze (7) eine Verstellbewegungsrichtung näherungsweise senkrecht zur Entladetürfläche der Entladetür (10) in deren geschlossener Stellung im Bereich der Dosierwalze (7) und/oder näherungsweise parallel zur Förderrichtung eines Kratzbodens (8) besitzt.

5. Landwirtschaftliche Erntemaschine nach einem der vorhergehenden Ansprüche, wobei eine Erfassungseinrichtung (24) zum Erfassen der Belastung der Dosierwalze (7) durch das Erntegut vorgesehen ist, wobei die genannte Erfassungseinrichtung (24) dazu ausgebildet ist, eine Verschiebung der Dosierwalze (7) entlang des ersten Verstellwegs bei geschlossener Entladetür (10) und/oder die Belastung der Vorspannvorrichtung (15) zu erfassen.

6. Landwirtschaftliche Erntemaschine nach dem vorhergehenden Anspruch, wobei die Erfassungseinrichtung einen Wegmesssensor zum Messen des Verschiebewegs der Dosierwalze (7) und/oder einen Kraft- und/oder Drucksensor zum Messen der Vorspannkraft der Vorspannvorrichtung aufweist.

7. Landwirtschaftliche Erntemaschine nach einem der vorhergehenden Ansprüche, wobei eine Steuervorrichtung (9) zum Ansteuern eines Förderbodenantriebs, insbesondere Kratzbodenantriebs, in Abhängigkeit einer erfassten Verschiebung der Dosierwalze (7) und/oder in Abhängigkeit einer erfassten Belastung der Vorspannvorrichtung (15) vorgesehen ist.

8. Landwirtschaftliche Erntemaschine nach einem der vorhergehenden Ansprüche, wobei die Vorspannvorrichtung (15) dazu konfiguriert ist, unterschiedlich hohe Vorspannkräfte auf die Dosierwalze (7) auszuüben und bei geschlossener Entladetür (10) eine höhere Vorspannkraft als bei geöffneter Entladetür (10) aufzubringen.

9. Landwirtschaftliche Erntemaschine nach einem der vorhergehenden Ansprüche, wobei eine Schaltvorrichtung zum Umschalten der Verstellbarkeit vom ersten Verstellweg auf den zweiten Verstellweg in Abhängigkeit einer Stellung der Entladetür (10) und/oder zum Umschalten der Vorspannung der Vorspannvorrichtung (15) in Abhängigkeit der Stellung der Entladetür vorgesehen ist.

10. Landwirtschaftliche Erntemaschine nach dem vorhergehenden Anspruch, wobei die Schaltvorrichtung einen Betätiger umfasst, der beim Schließen der Entladetür (10) mit der Entladetür (10) in Eingriff gerät und von der Entladetür (10) bewegt wird.

11. Landwirtschaftliche Erntemaschine nach einem der beiden vorhergehenden Ansprüche, wobei die Schaltvorrichtung einen verstellbaren Anschlag (18), gegen den sich die Vorspannvorrichtung (15) abstützt, und/oder einen verstellbaren Anschlag (23), der den ersten Verstellweg (12) begrenzt, aufweist.

12. Landwirtschaftliche Erntemaschine nach dem vorhergehenden Anspruch, wobei der Anschlag (18) für die Vorspannvorrichtung (15) und/oder der Anschlag (23) für die Begrenzung des Stellwegs mit einem Hebel (19) verbunden ist, der beim Schließen der Entladetür (10) mit der Entladetür (10) in Eingriff gerät und von der Entladetür (10) verschwenkbar ist.

## Claims

1. Agricultural harvesting machine, in particular in the form of a loader wagon, comprising a loading chamber (5) which can be opened and closed by an unloading door (10), and an unloading-metering device (6) for unloading and metering the crops out of the loading chamber (5), wherein the unloading-metering device (6) comprises at least one metering roller (7) which is mounted in an adjustable position in order to reduce the start-up resistance, **characterised in that** the metering roller (7) is mounted such that it can be adjusted in multiple stages, wherein the metering roller (7) has a first adjustment path (12) when the unloading door (10) is closed in order to move out of the way under crop pressure counter to a first preload force of a preload device (15) and has a second adjustment path (13) when the unloading door is open in order to move out of the way under crop pressure without overcoming a preload force or counter to a second preload force that is lower than the first preload force.

2. Agricultural harvesting machine according to the preceding claim, wherein the second adjustment path (13) is longer than the first adjustment path (12) and/or extends beyond the first adjustment path (12).

3. Agricultural harvesting machine according to any of the preceding claims, wherein the at least one metering roller (7) is movably guided by its ends in a sliding guide (11) transversely to the longitudinal axis of the metering roller.

4. Agricultural harvesting machine according to the preceding claim, wherein the metering roller (7) has an adjustment-movement direction that is approximately perpendicular to the unloading-door surface of the unloading door (10) in its closed position in the region of the metering roller (7) and/or approximately parallel to the conveying direction of a scraper floor (8).

5. Agricultural harvesting machine according to any of the preceding claims, wherein a detection apparatus (24) is provided for detecting the load on the metering roller (7) from the crops, wherein said detection apparatus (24) is designed to detect a movement of the metering roller (7) along the first adjustment path when the unloading door (10) is closed and/or the load of the preload device (15).

6. Agricultural harvesting machine according to the preceding claim, wherein the detection apparatus comprises a displacement sensor for measuring the movement path of the metering roller (7) and/or a force and/or pressure sensor for measuring the preload force of the preload device.

7. Agricultural harvesting machine according to any of the preceding claims, wherein a control device (9) for actuating a conveyor floor drive, in particular a scraper floor drive, on the basis of a detected movement of the metering roller (7) and/or on the basis of a detected load of the preload device (15).

8. Agricultural harvesting machine according to any of the preceding claims, wherein the preload device (15) is configured to exert preload forces of different magnitudes on the metering roller (7) and to apply a higher preload force when the unloading door (10) is closed than when the unloading door (10) is open.

9. Agricultural harvesting machine according to any of the preceding claims, wherein a switching device is provided for switching the adjustability from the first adjustment path to the second adjustment path on the basis of a position of the unloading door (10) and/or for switching the preload of the preload device (15) on the basis of the position of the unloading door.

10. Agricultural harvesting machine according to the preceding claim, wherein the switching device comprises an actuator which, when closing the unloading door (10), comes into engagement with the unloading door (10) and is moved by the unloading door (10).

11. Agricultural harvesting machine according to any of the two preceding claims, wherein the switching device comprises an adjustable stop (18), against which the preload device (15) is supported, and/or comprises an adjustable stop (23), which limits the first adjustment path (12).

12. Agricultural harvesting machine according to the preceding claim, wherein the stop (18) for the preload device (15) and/or the stop (23) for limiting the adjustment path is connected to a lever (19), which, when closing the unloading door (10), comes into engagement with the unloading door (10) and can be pivoted by the unloading door (10).

## Revendications

1. Machine de récolte agricole, en particulier sous la forme d'une remorque autochargeuse, comprenant un espace de chargement (5), qui s'ouvre et se ferme par une porte de déchargement (10), et un dispositif de dosage de déchargement (6) destiné au déchargement et au dosage de la récolte hors de l'espace de chargement (5), le dispositif de dosage de déchargement (6) comportant au moins un rouleau doseur (7), qui est monté avec une position réglable pour réduire la résistance au démarrage, **caractérisée en ce que** le rouleau doseur (7) est monté réglable sur plusieurs niveaux, le rouleau doseur (7) possédant, lorsque la porte de déchargement (10) est fermée, une première course de réglage (12) pour dévier sous la pression de la récolte à l'encontre d'une première force de précontrainte d'un dispositif de précontrainte (15) et, lorsque la porte de déchargement est ouverte, une seconde course de réglage (13) pour dévier sous la pression de la récolte sans surmonter une force de précontrainte ou à l'encontre d'une seconde force de précontrainte, qui est inférieure à la première force de précontrainte.

2. Machine de récolte agricole selon la revendication précédente, dans laquelle la seconde course de réglage (13) est plus longue que la première course de réglage (12) et/ou s'étend au-delà de la première course de réglage (12).

3. Machine de récolte agricole selon l'une des revendications précédentes, dans laquelle l'au moins un rouleau doseur (7) est guidé mobile transversalement à l'axe longitudinal de rouleau doseur, avec ses extrémités dans un guidage en coulissement (11).

4. Machine de récolte agricole selon la revendication précédente, dans laquelle le rouleau doseur (7) possède une direction de déplacement de réglage approximativement perpendiculaire à la surface de porte de déchargement de la porte de déchargement (10) dans sa position fermée dans la zone du rouleau doseur (7) et/ou approximativement parallèle au sens de transport d'un fond mouvant à traverses (8).

5. Machine de récolte agricole selon l'une des revendications précédentes, dans laquelle un dispositif de détection (24) est prévu pour détecter la sollicitation du rouleau doseur (7) par la récolte, ledit dispositif de détection (24) étant conçu pour détecter un coulissement du rouleau doseur (7) le long de la première course de réglage lorsque la porte de déchargement (10) est fermée et/ou la sollicitation du dispositif de précontrainte (15).

6. Machine de récolte agricole selon la revendication précédente, dans laquelle le dispositif de détection comporte un capteur de mesure de déplacement pour mesurer la course de déplacement du rouleau doseur (7) et/ou un capteur de force et/ou de pression pour mesurer la force de précontrainte du dispositif de précontrainte.

7. Machine de récolte agricole selon l'une des revendications précédentes, dans laquelle un dispositif de commande (9) est prévu pour la commande d'un entraînement de fond transporteur, en particulier un entraînement de fond mouvant à traverses, en fonction d'un déplacement détecté du rouleau doseur (7) et/ou en fonction d'une sollicitation détectée du dispositif de précontrainte (15).

8. Machine de récolte agricole selon l'une des revendications précédentes, dans laquelle le dispositif de précontrainte (15) est configuré pour exercer différentes forces de précontrainte sur le rouleau doseur (7) et, lorsque la porte de déchargement (10) est fermée, appliquer une force de précontrainte plus élevée que lorsque la porte de déchargement (10) est ouverte.

9. Machine de récolte agricole selon l'une des revendications précédentes, dans laquelle un dispositif de commutation est prévu pour commuter la possibilité de réglage de la première course de réglage à la seconde course de réglage en fonction d'une position de la porte de déchargement (10) et/ou pour commuter la précontrainte du dispositif de précontrainte (15) en fonction de la position de la porte de déchargement.

10. Machine de récolte agricole selon la revendication précédente, dans laquelle le dispositif de commutation comprend un actionneur, qui, lors de la fermeture de la porte de déchargement (10), vient en prise avec la porte de déchargement (10) et est déplacé par la porte de déchargement (10).

11. Machine de récolte agricole selon l'une des deux revendications précédentes, dans laquelle le dispositif de commutation comporte une butée (18) réglable, contre laquelle s'appuie le dispositif de précontrainte (15) et/ou une butée (23) réglable, qui limite la première course de réglage (12).

12. Machine de récolte agricole selon la revendication précédente, dans laquelle la butée (18) pour le dispositif de précontrainte (15) et/ou la butée (23) pour la limitation de la course de réglage est reliée à un levier (19), qui, lors de la fermeture de la porte de déchargement (10), vient en prise avec la porte de déchargement (10) et peut être pivoté par la porte de déchargement (10).
